# EUROPÄISCHE PATENTSCHRIFT

(11) **EP 1 156 175 B1**
(45) Veröffentlichungstag und Bekanntmachung des Hinweises auf die Patenterteilung: **13.10.2004**
(21) Anmeldenummer: 01109556.9
(22) Anmeldetag: 18.04.2001
(51) Int. Cl.: E04G 11/28, E04H 12/12

(54) **Verfahren zur Errichtung mehrerer gleichartiger Bauwerke mit einer kegelstumpfförmigen Form**
Method for erecting several similar constructions having a frustoconical shape
Méthode de réalisation de plusieurs constructions similaires ayant une forme tronconique

(30) Priorität: 15.05.2000 AT 8372000
(43) Veröffentlichungstag der Anmeldung: 21.11.2001
(73) Patentinhaber: RUND-STAHL-BAU GESELLSCHAFT M.B.H., A-6972 Fussach (AT)
(72) Erfinder: Mathis, Hugo, Dipl.-Ing., 6900 Bregenz (AT)
(74) Vertreter: Hofmann, Ralf U., Dr.

(56) Entgegenhaltungen:
- EP-A- 0 960 986
- US-A- 1 478 653

## Beschreibung

Die Erfindung betrifft ein Verfahren zur Errichtung mehrerer gleichartiger Bauwerke aus Stahlbeton mit einer kegelstumpfförmigen Form, insbesondere von Stahlbetontürmen einer Windkraftanlage, wobei jedes derartige Bauwerk in einzelnen Betonierschritten errichtet wird, in denen jeweils ein Betonierabschnitt betoniert wird. Weiters betrifft die Erfindung einen Schalungsabschnitt mit den Merkmalen des einleitenden Teils des Anspruchs 8.

Es ist bekannt, zur Errichtung eines Bauwerks die Außen- oder Innenschalung vorerst zu errichten und anschließend die Innen- oder Außenschalung schrittweise aufzubauen und entsprechend diesem Aufbau die gebildeten Schalungshohlräume mit Beton zu füllen. Dies im Zusammenhang mit ebenen Wänden, aber auch mit umfangsgeschlossenen oder konisch gestalteten Baukörpern.

Ferner sind im Zusammenhang mit der Errichtung von Rundbauten Kletterschalungen bekannt, bei denen zwei umfangsgeschlossene Schalungsringe an einem Traggerüst aufgehängt werden. Der von den Schalungsringen begrenzte Schalungshohlraum wird mit Beton gefüllt, nach dem Erhärten oder Abbinden des Betons werden die Schalungsringe gelöst und am Traggerüst so weit hochgefahren, daß ihr unterer Teil noch im Bereich der Oberkante des gegossenen Mauerringes liegt. Dann werden die Ringe neuerlich festgespannt und fixiert, Beton wiederum eingefüllt und das erwähnte Wechselspiel wiederholt sich, bis die gewünschte Bauhöhe erreicht ist. Auf diese Weise wird bei solchen zylindrischen Bauten ein Mauerring auf den anderen gesetzt.

Ein weiterer Typ einer Kletterschalung ist beispielsweise in der US-PS 1 478 653 gezeigt und beschrieben. Das Wesen einer solchen Kletterschalung liegt darin, daß hier das Mauerwerk durchdringende Schalungsanker vorzusehen sind, an und mit welchen die Schalungselemente in ihrer Gesamtheit verspannt werden, wobei die bei einem Betonierschritt jeweils oben einbetonierten Anker in der Folge als Fußanker für die Schalung im nächsten Betonierschritt verwendet werden. In jedem Betonierschritt wird dann ein neuer Anker eingebaut, dabei muß vorausgesetzt werden, daß die Schalung über ihre Höhe hinreichend biegesteif ist. Die Schalung wird dann hochgesetzt, wenn der vorausgegangene betonierte Mauerabschnitt abgebunden hat, da er über die Schalungsanker das gesamte Gewicht der Schalung zu tragen hat. Die Schalung selbst besteht aus den eigentlichen Schalungstafeln und dem die Schalungstafeln versteifenden Gerüst.

Solche Kletterschalungen wurden auch zur Errichtung von Stahlbetontürmen mit einer kegelstumpfförmigen Form verwendet, wie sie bei Windkraftanlagen zum Anbringen von Windrädern eingesetzt werden. Das Problem liegt hierbei im sich von der Basis bis zur Spitze des Turmes verringernden Durchmesser. Die Kletterschalungen für die Außen- und Innenschalung müssen daher nicht nur kegelmantelförmige Schalhäute aufweisen, sondern ihr Durchmesser muß zur Anpassung an die jeweilige Bauetappe auch veränderbar ausgebildet sein. Dies führt zu einem erheblichen Aufwand, vor allem bei der Ausbildung der Innenschalung. Während auf die umfangsgeschlossene Außenschalung lediglich Zugkräfte wirken, die relativ leicht abgeführt werden können, wirken auf die Innenschalung beim Einfüllen des Betons ganz erhebliche Druckkräfte. Die für die Abführung dieser Druckkräfte bei der Innenschalung üblicherweise vorgesehenen Versteifungsringe können bei ihrer notwendigen Stabilität kaum mit verstellbarem Durchmesser ausgebildet werden. Es wurde daher bereits vorgeschlagen, für jeden Betonierschritt eigene Versteifungsringe auszubilden und lediglich die Schalungshaut der Innenschalung an einen unterschiedlichen Durchmesser des zu schalenden Betonrings anpaßbar zu gestalten. Dadurch fällt aber ein erheblicher Teil der Einsparung von Materialkosten bei einer Kletterschalung im Vergleich zu einer durchgehenden Schalung weg. Die bei der Verwendung einer Kletterschalung auftretenden Nachteile bleiben hingegen bestehen. Diese betreffen vor allem die aufwendige Ausrichtung der Schalung an den Schalungsankern, welche bei jedem Betonierschritt durchzuführen ist. Außerdem ist der jeweilige neue Aufbau der Innenschalung mit jeweils eigenen Versteifungsringen, an denen die die Schalhaut bildenden Bleche entsprechend der gewünschten Kegelmantelfläche anzubringen sind, mit erheblichem Aufwand verbunden.

Bei Windkraftanlagen werden üblicherweise eine Mehrzahl von Windtürmen vorgesehen, bei denen jeweils ein Windrad an einem Stahlbetonturm angebracht ist. Beispielsweise können zwölf nebeneinander angeordnete Windtürme vorgesehen sein. Sollen die Stahlbetontürme nicht nacheinander errichtet werden, was zu einer viel zu langen Bauzeit führen würde, sondern in gleichzeitiger Bautätigkeit errichtet werden, so ist für jeden Stahlbetonturm eine eigene Kletterschalung in Form einer Innen- und einer Außenschalung vorzusehen.

Ein Verfahren zur Herstellung von Bauwerken aus Stahlbeton mit einer kegelstumpfförmigen Form, insbesondere von Stahlbetontürmen einer Windkraftanlage ist aus der EP 0 960 986 A2 bekannt. Das Bauwerk wird in einzelnen Betonierschritten errichtet, in denen jeweils ein Betonierabschnitt betoniert wird. Hierbei werden vorgefertigte Einzelschalungsteile in Modulbauweise eingesetzt, die vor Ort zu Schalungsrohrschüssen für die Innen- und Außenschalung zusammengebaut werden, wodurch eine verlorene Schalung gebildet wird, die nach der Herstellung des Bauwerks am Bauwerk belassen wird. Die EP-A-0960986 offenbart ein Verfahren bzw.einen Schalungsabschnitt, die jeweils die Merkmale des Oberbegriffes der Ansprüche 1 bzw. 8 aufweisen.

Aufgabe der Erfindung ist es, ein verbessertes Verfahren der eingangs genannten Art bereitzustellen, welches möglichst kostengünstig und einfach bei einer relativ kurzen Gesamtbauzeit durchführbar ist. Erfindungsgemäß gelingt dies dadurch, daß zur Errichtung der mehreren gleichartigen Bauwerke mit zumindest teilweise gleichzeitiger Bautätigkeit eine einzelne Innenschalung verwendet wird, welche aus einer Mehrzahl von miteinander verbindbaren Schalungsabschnitten besteht, deren Höhe jeweils der Höhe eines Betonierabschnitts entspricht und deren äußere die Schalhaut bildenden Oberflächen in ihrer Gesamtheit der Form der inneren Oberflächen der kegelstumpfförmigen Betonwände der Bauwerke entsprechen und die einen oberen, vom Hauptteil des Schalungsabschnitts abnehmbaren Teil aufweisen, wobei bei einem Betonierschritt folgende Arbeitsschritte durchgeführt werden:
- der zu diesem Betonierschritt gehörende, fertig montierte Schalungsabschnitt der Innenschalung wird auf dem im vorherigen Betonierschritt an der Betonwand befestigten oberen Teil des zum vorherigen Betonierschritt gehörigen Schalungsabschnitts der Innenschalung aufgesetzt, wobei an der Außenseite des Schalungsabschnitts eine Armierung bereits angebracht ist oder eine Armierung in einem weiteren Arbeitsschritt auf der Mauerkrone des vorherigen Betonierschritts angeordnet wird,
- eine Außenschalung wird angebracht,
- Beton wird eingefüllt und aushärten gelassen, wobei der obere Teil des Schalungsabschnitts der Innenschalung an der Betonwand befestigt wird und
- die Befestigung des oberen Teils des zum vorherigen Betonierschritt gehörenden Schalungsabschnitts der Innenschalung wird gelöst, und dieser obere Teil wird zusammen mit dem Hauptteil des zum darauffolgenden Betonierschritt gehörenden Schalungsabschnitts von der Betonwand abgenommen.

Der Schalungsabschnitt einer Innenschalung zur Errichtung mehrerer gleichartiger Bauwerke aus Stahlbeton mit einer kegelstumpfförmigen Form der Erfindung weist die Merkmale des Anspruchs 8 auf.

Beim erfindungsgemäßen Verfahren wird somit ein Schalungsabschnitt der Innenschalung wiederum frei, wenn der nächst höhere Betonierabschnitt fertiggestellt ist. Dieser Schalungsabschnitt steht in der Folge zur Schalung eines Betonierabschnitts eines der anderen der zu errichtenden Bauwerke in der Folge zur Verfügung. Die einzelnen Bauwerke können dadurch um zwei Betonierschritte gegeneinander versetzt hergestellt werden. Nach der Fertigstellung des ersten Bauwerks steht somit das zweite Bauwerk lediglich zwei Betonierschritte vor seiner Fertigstellung, das dritte Bauwerk vier Betonierschritte vor seiner Fertigstellung usw. Da beim erfindungsgemäßen Verfahren ein Betonierschritt sehr rasch, z. B. im Tagestakt, durchgeführt werden kann, ist die Gesamtbauzeit für die mehreren gleichartigen Bauwerke relativ kurz.

Auf mit dem erfindungsgemäßen Verfahren errichtete kegelstumpfförmige Bauwerke können zur Fertigstellung der herzustellenden Bauten unterschiedliche Aufbauten aufgebracht werden, beispielsweise im Falle von Windtürmen eine Kappe aus Stahlblech, welche das Windrad trägt. Auch weitere oder andere Aufbauten, beispielsweise betonierte Aufbauten sind denkbar und möglich, das heißt ein mit dem erfindungsgemäßen Verfahren hergestelltes Bauwerk stellt hierbei einen Teil des insgesamt herzustellenden Baus dar.

Die Außenschalung, auf die lediglich Zugkräfte wirken und die daher trotz ihrer Verstellbarkeit relativ einfach ausgebildet sein kann, kann beim erfindungsgemäßen Verfahren in der Form einer herkömmlichen runden, verstellbaren Kletterschalung ausgebildet sein.

Weitere Vorteile und Einzelheiten der Erfindung werden im folgenden anhand des in der Zeichnung dargestellten Ausführungsbeispiels erläutert. In der Zeichnung zeigen:
- Fig. 1: eine schematische Ansicht eines Windturms mit einem kegelstumpfförmigen Stahlbetonturm;
- die Fig.2 bis 5: schematische Schnitte durch den teilweise fertiggestellten Turm in seinem jeweils obersten Bereich;
- Fig. 6: eine dreidimensionale Teildarstellung eines Schalungsabschnitts der Innenschalung;
- Fig. 7: einen Teilquerschnitt des in der Betonwand befestigten U-Profils mit dem daran befestigten nächst höheren Schalungsabschnitt;
- Fig. 8: eine schematische Seitenansicht eines Ankers;
- Fig. 9: eine schematische Ansicht der ausgebreiteten Außenschalung;
- Fig. 10: eine schematische Draufsicht auf zwei aneinander befestigte Schaltafeln der Außenschalung;
- Fig. 11: eine perspektivische Darstellung der Grundgerüste der inneren und äußeren Arbeitsplattformen:
- Fig. 12: eine Draufsicht auf ein etwas modifiziertes Ausführungsbeispiel auf den oberen Teil eines Schalungsabschnitts und
- Fig. 13: einen Querschnitt durch ein Ausbaukeilelement entsprechend der Linie A-A von Fig. 12.

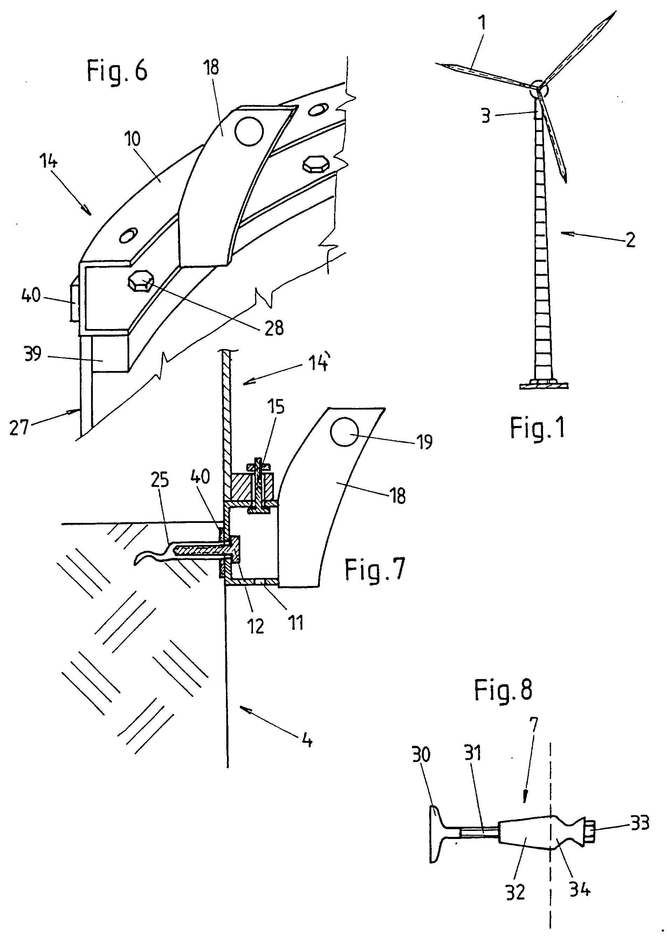

Der in Fig. 1 schematisch dargestellte Windturm weist ein Windrad 1 auf, das auf einem kegelstumpfförmigen bzw. konischem Bauwerk 2 aus Stahlbeton in Form eines Stahlbetonturms gelagert ist. Dazu ist auf der Spitze des Stahlbetonturms eine Kappe 3 aus Stahlblech angebracht, welche das Windrad 1 trägt. Das Bauwerk 2 kann beispielsweise eine Höhe von 88 m aufweisen. An seiner Basis beträgt der Durchmesser 5,8 m und an seiner Spitze 1,8 m. Das Bauwerk 2 wird in einzelnen Betonierschritten errichtet, die in Fig. 1 durch die waagrechten Linien angedeutet sind und jeweils eine Höhe von 4,4 m aufweisen.

Die einzelnen Betonierabschnitte sind zur Erhöhung der Stabilität in Vertikalrichtung in bekannter Weise vorgespannt (beispielsweise über Spannglieder). Auf diese bekannte Einrichtung zur Vorspannung der Betonierabschnitte, die nicht Gegenstand dieser Anmeldung ist, wird im folgenden nicht weiter eingegangen.

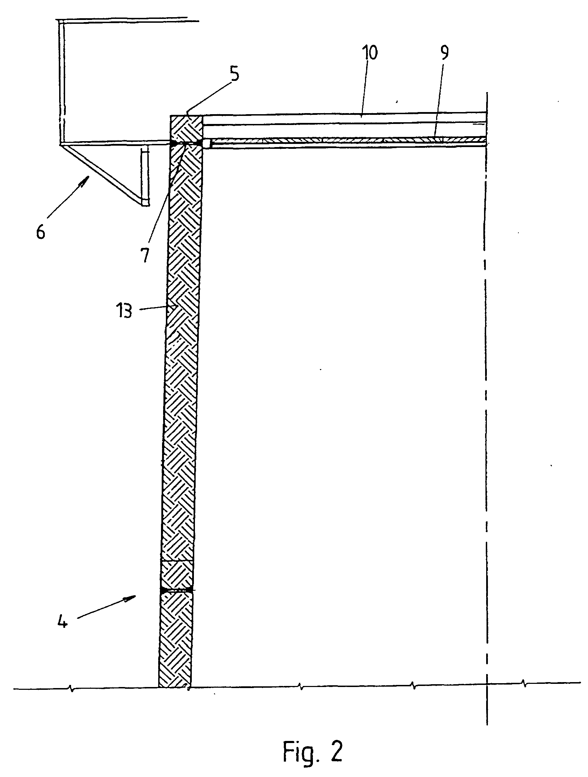

In den Fig. 2 bis 5 sind schematische Querschnitte durch den jeweils obersten Abschnitt eines teilweise fertiggestellten Bauwerks 2 dargestellt, anhand derer die einzelnen Betonierschritte im folgenden genauer erläutert werden:

In Fig. 2 ist der Zustand dargestellt, wie er nach Fertigstellung einer Bauetappe bzw. eines Betonierschritts vorliegt. An der Außenseite der Betonwand 4 ist im Bereich ihrer Krone 5 ein um die Betonwand 4 umlaufendes Gerüst 6 angebracht, welches eine äußere Arbeitsplattform bildet. Dazu sind in der Betonwand 4 entlang ihres Umfanges an mehreren Stellen in bekannter Weise Anker 7 einbetoniert. Diese Anker können in herkömmlicher Weise aufgebaut sein, vgl. Fig. 8. In eine einbetonierte Gewindeplatte 30 ist eine Gewindestange 31 eingeschraubt, auf deren anderes Ende ein Kletterkonus 32 aufgeschraubt ist. An diesem wird über eine Schraube 33 ein Einhängring 34 befestigt, der über die Betonwand 4 vorsteht. An diesen Einhängring 34 der Anker 7 ist das Gerüst 6 in herkömmlicher Weise über hier nicht näher dargestellte Schuhe aufgehängt. Zur Anpassung an die bei den einzelnen Betonierschritten unterschiedlichen Durchmesser der Betonwand 4, die von unten nach oben immer kleiner werden, kann das Gerüst einen nach innen ausziehbaren Teil aufweisen, über den es mittels eines Schuhs am Anker 7 aufgehängt ist.

An der Innenseite der Betonwand sind ebenfalls Anker 7 vorgesehen, an denen mittels wiederum nicht dargestellter Schuhe in bekannter Weise eine innere Arbeitsplattform 9 aufgehängt ist. Dazu kann die Arbeitsplattform 9 sternförmige, zu den einzelnen Kletterkonen verlaufende Arme aufweisen, die im Bereich des Zentrums des Bauwerks miteinander verbunden sind und auf denen Bühnenbretter angeordnet sind. Wenn diese Arme der Arbeitsplattform 9 aus Holz bestehen, können sie im Verlauf der Errichtung des Bauwerks bei jedem Betonierschritt auf die erforderliche kürzere Länge abgelängt werden.

Beispielhafte Ausführungsformen für die Grundgerüste der inneren und äußeren Arbeitsplattformen sind in der Fig. 11 dargestellt. Das Grundgerüst der äußeren Arbeitsplattform weist in Hohlprofilen 35 verschiebbare Arme 36 auf, an denen Schuhe zum Einhängen in den Ankern 7 angebracht sind. Wenn im Laufe des Baus des kegelstumpfförmigen Bauwerks die Arme 36 nicht mehr weiter nach innen ausgezogen werden können, werden Ausbauprofilteile 37 zur Verkleinerung des Grundgerüstes entfernt. Das Grundgerüst der inneren Arbeitsplattform umfaßt sternförmig angeordnete, teleskopierbare Arme 38, an deren freien Enden wiederum Schuhe zum Einhängen in den Ankern 7 angebracht sind.

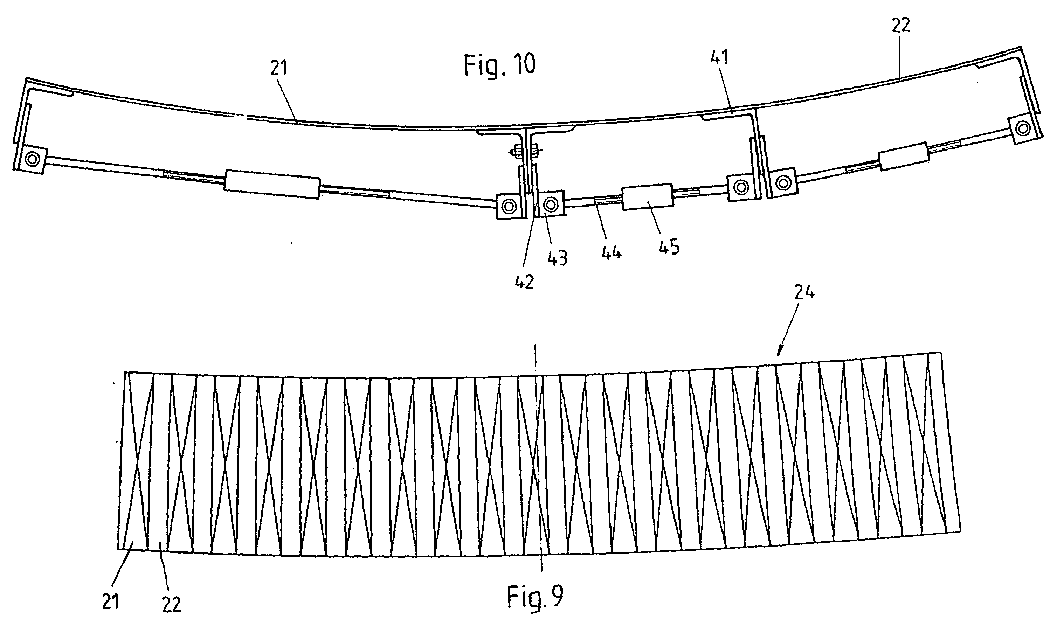

Von dem bei diesem beendeten Betonierschritt verwendeten Schalungsabschnitt der Innenschalung ist ein oberer Teil 10 an der Innenseite des zuletzt fertiggestellten Betonierabschnitts 13 der Betonwand 4 befestigt. Wie in den Fig. 6 und 7 dargestellt, wird dieser obere Teil 10 von einem ringförmigen U-Profil gebildet. Durch Schraubenlöcher 11 ist er mit dem restlichen Teil des Schalungsabschnitts, der den Hauptteil 27 des Schalungsabschnitts bildet, mittels Schrauben 28 verschraubbar. Anstelle von Schrauben 28 könnten zur Befestigung des oberen Teils 10 am Hauptteil 27 auch U-förmige Klemmteile bzw. Klemmbriden (Klemmschellen) vorgesehen sein, welche den unteren Steg des U-Profils und den oberen Flansch 39 des Hauptteils 27 übergreifen und gegeneinander verspannen. Über Schrauben 12 und Dübel 25, die beim Betonieren dieses Betonierabschnitts 13 mit einbetoniert wurden, ist der obere Teil 10 an der Betonwand 4 befestigt. An der einen Teil der Schalhaut bildenden Vorderseite des oberen Teils 10 ist bevorzugterweise ein Vorsprung 40 vorgesehen (beispielsweise in Form eines aufgeschweißten Stahlstreifens). Dieser Vorsprung 40 dient zur Abstützung in der Betonwand 4.

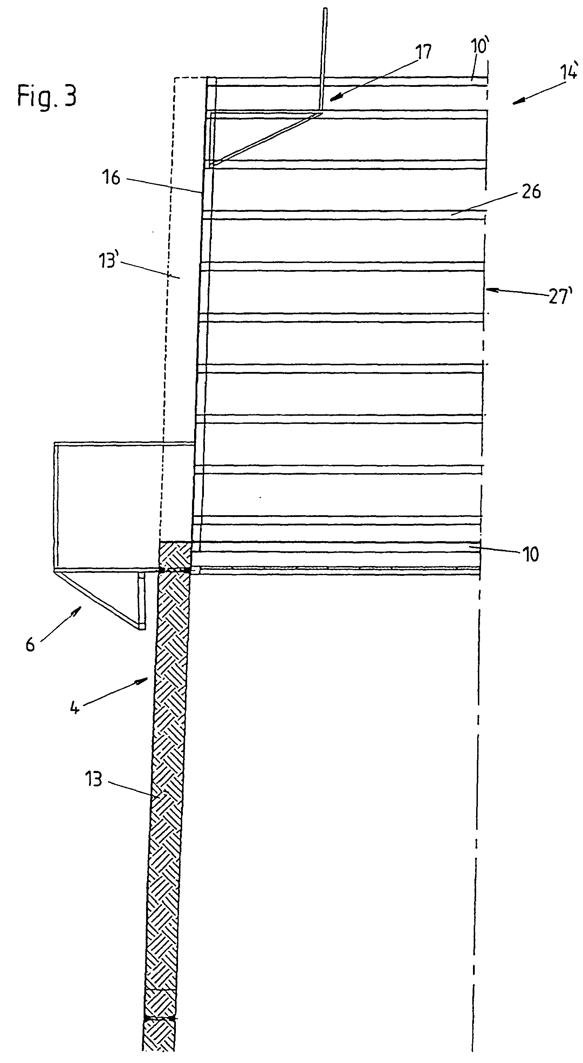

Zur Durchführung des nächsten Betonierschritts wird zunächst, wie in Fig. 3 dargestellt, der zu diesem nächsten Betonierabschnitt 13' der Betonwand gehörende Schalungsabschnitt 14' der Innenschalung auf den oberen Teil 10 der zum vorherigen Betonierabschnitt 13 gehörenden Innenschalung aufgesetzt und an diesem mittels Schrauben 15 (vgl. Fig. 7) befestigt. Auch hier könnten zur Befestigung des Schalungsabschnitts 14' am oberen Teil 10 U-förmige Klemmteile anstelle von Schrauben verwendet werden. Für jeden Betonierabschnitt 13, 13' des Bauwerks 2 ist ein eigener an den jeweiligen Durchmesser des Betonierabschnitts angepaßter Schalungsabschnitt 14, 14' der Innenschalung vorgesehen. Ein solcher Schalungsabschnitt besteht jeweils aus einem Hauptteil 27, 27', der im wesentlichen von der Schalungshaut 16 und Aussteifungsringen 26 gebildet wird und aus einem oberen Teil 10, 10', der am Hauptteil 27, 27' des Schalungsabschnitts 14, 14' über Verschraubungen (oder Klemmteile) befestigt ist. Im oberen Bereich des Hauptteils 27, 27' des Schalungsabschnitts 14, 14' kann weiters eine an der Innenseite des Schalungsabschnitts umlaufende Arbeitsplattform 17 angebracht sein.

Da der Schalungsabschnitt 14' auf den am Betonierabschnitt 13 der Betonwand 4 befestigten oberen Teil 10 des vorherigen Schalungsabschnitts aufgesetzt wird und dieser obere Teil bereits die korrekte Ausrichtung des Schalungsabschnitts 14' vorgibt, ist eine weitere Ausrichtung des Schalungsabschnitts 14' im allgemeinen nicht erforderlich. Eine gegebenenfalls erforderliche Korrektur der Ausrichtung des Schalungsabschnitts 14' ist auf einfache Weise durch Zwischenschaltung von entsprechenden scheibenförmigen Ausgleichselementen zwischen dem oberen Teil 10 und dem Schalungsabschnitt 14' möglich.

Der Schalungsabschnitt 14' wird über einen entsprechenden Kran von oben auf den oberen Teil 10 abgelassen. Zur Erleichterung der Positionierung sind am oberen Teil 10 innen nach oben abstehende und nach innen ausgerichtete Führungslaschen 18 angeordnet. Um den Umfang des den oberen Teil 10 bildenden U-Profils sind mehrere derartige Führungslaschen 18 vorgesehen. In den Führungslaschen 18 sind Durchtrittsöffnungen 19 angeordnet, mittels derer der obere Teil 10' des Schalungsabschnitts 14' an Kranhaken aufhängbar ist.

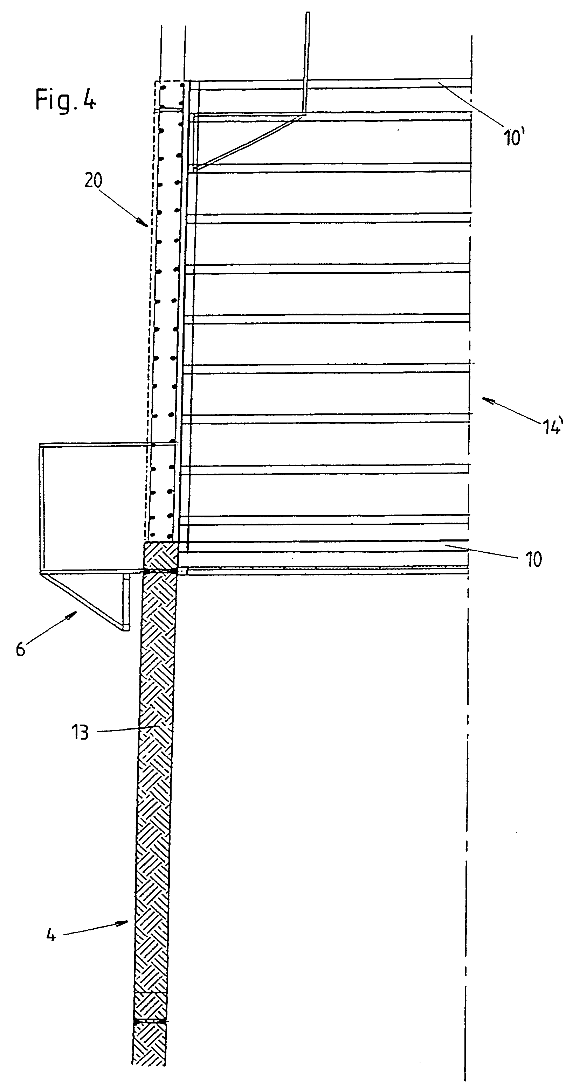

Nach der Anbringung des Schalungsabschnitts 14' wird die Armierung 20 auf die Krone 5 aufgesetzt (Fig. 4). An dieser Krone 5 stehen nicht dargestellte Armierungsstäbe aus der Betonwand 4 ein Stück weit hervor, welche mit der Armierung 20 überlappen. Die ringförmige Armierung 20 wird zunächst am Boden zusammengebaut und anschließend mittels eines Kranes von oben her zugeführt. An der Außenseite des Schalungsabschnitts 14' können (in den Figuren nicht dargestellte) Halteteile für die Armierung 20 angebracht sein. Im oberen Bereich der Armierung sind weiters am Schalungsabschnitt 14' die einzubetonierenden Anker 7 angebracht.

Anstelle der beschriebenen Aufbringung des Schalungsabschnitts 14' und der Armierung 20 in getrennten, aufeinanderfolgenden Arbeitsschritten ist in einer bevorzugten Ausführungsform der Erfindung folgende Vorgangsweise vorgesehen: Die Armierung 20 wird um die Außenseite des fertig montierten Schalungsabschnitts 14' montiert und an dieser befestigt, solange sich der Schalungsabschnitt 14' noch am Boden befindet. Anschließend wird der Schalungsabschnitt 14' mit der daran befestigten Armierung 20 von einem Kran angehoben und von oben auf den oberen Teil 10 abgelassen.

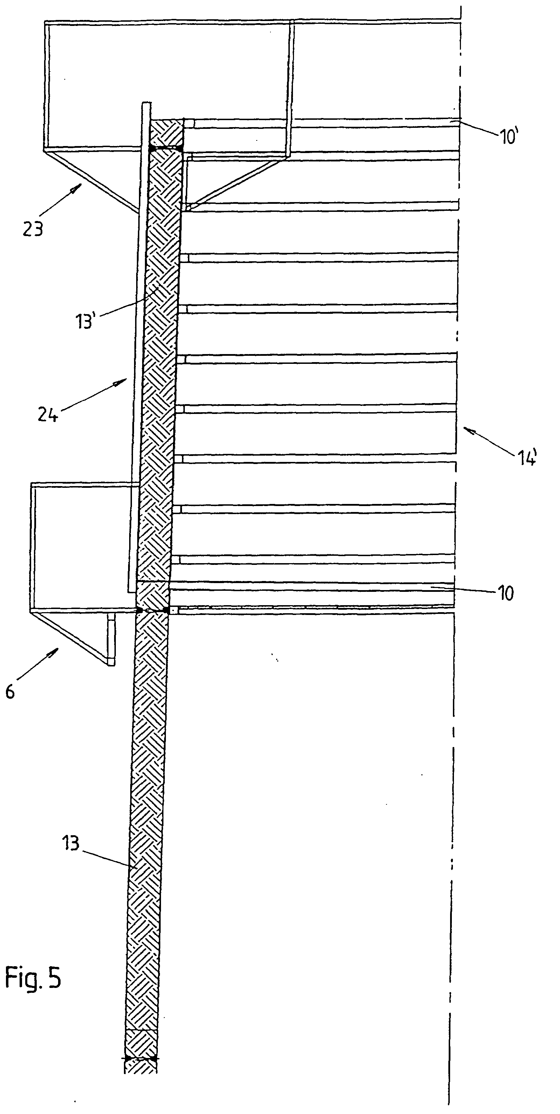

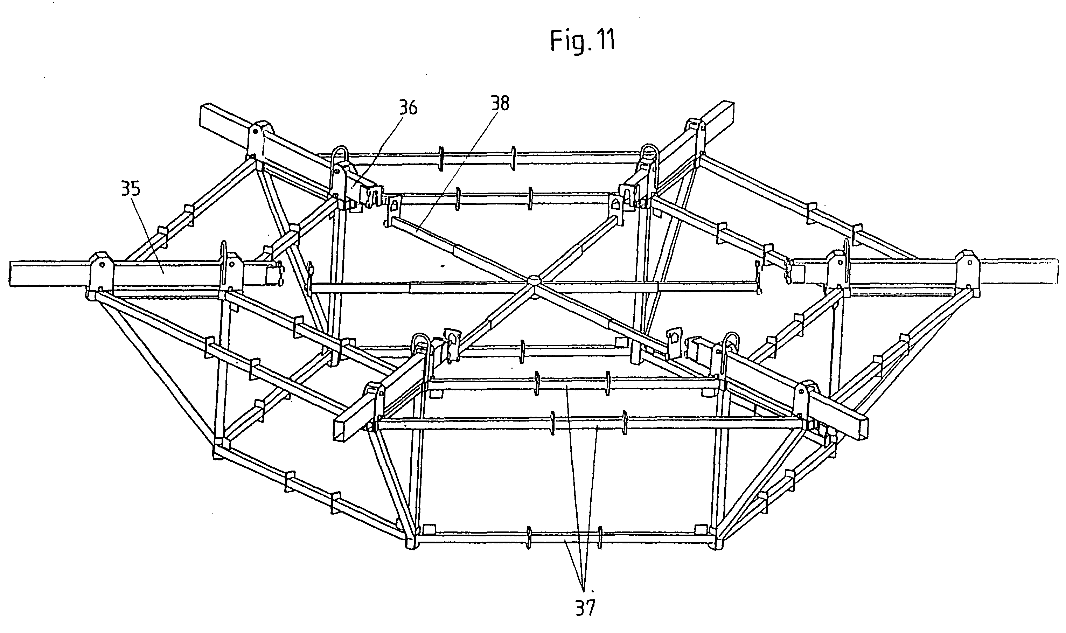

Die als nächstes entsprechend Fig. 5 anzubringende Außenschalung 24 ist in bekannter Weise als Kletterschalung ausgebildet, deren Durchmesser veränderbar ist. Wie in Fig. 9 schematisch dargestellt, besteht die Außenschalung aus einer Mehrzahl von miteinander verbundenen Schalungselementen, wobei rechteckige Schalungselemente 21 und trapezförmige Schalungselemente 22 einander abwechseln. Aus Fig. 10 ist ersichtlich, daß die Schalungselemente 21, 22 jeweils aus die Schalhaut bildenden Schalungsblechen bestehen, an deren Rückseiten Befestigungswinkel 29 angebracht sind, über die die Schalungselemente 21, 22 miteinander verschraubt werden können. In der Mitte der Rückseite der trapezförmigen Schalungselemente 22 sind zusätzlich Winkel 41 befestigt. An den Befestigungswinkeln 29 und an den Winkeln 41 sind Platten 42 angeschweißt oder angeschraubt, welche Laschen 43 tragen. An diesen sind Dorne 44 angelenkt, deren freie Enden mit Gewinden versehen sind und in Stellmuttern 45 ragen. Nach jedem Betonierschritt wird eines der rechteckigen Schalungselemente 21 entfernt und die Krümmungen der einzelnen Schalungselemente durch Verdrehen der Stellmuttern 45 eingestellt. Nun wird die Schalung wieder zu einer umfangsgeschlossenen Schalung mit einem etwas verringerten Durchmesser zusammengeschraubt, wobei sich die Krümmung der verbleibenden Schalungselemente etwas vergrößert hat. Im obersten Betonierabschnitt sind alle rechteckigen Schalungselemente 21 entfernt, und lediglich die trapezförmigen Schalungselemente 22, die die Konizität der Schalung ausbilden, sind zurückgeblieben. Die Höhe der Außenschalung 24 entspricht der Höhe der Betonierabschnitte 13, 13' bzw. der Höhe der Schalungsabschnitte 14, 14' der Innenschalung. Die Einrichtungen 41 bis 45 zur Verstellung der Krümmungen der einzelnen Schalungselemente 21, 22 könnten prinzipiell auch entfallen.

Die Außenschalung wird in bekannter Weise mit den Ankern 7, die auf der Außenseite des unteren Betonierabschnitts 13 angeordnet sind, verspannt. Im oberen Bereich wird die Außenschalung zusätzlich oberhalb der Armierung 20 mit dem Schalungsabschnitt 14' der Innenschalung verspannt. Weiters können ein oder mehrere außen um die Außenschalung umlaufende Formgebungsringe vorgesehen sein, die in den Figuren nicht dargestellt sind. Im oberen Bereich der Außenschalung ist weiters eine an der Außenseite der Außenschalung umlaufende Arbeitsplattform 23 angebracht. In der Folge wird der Beton eingefüllt und aushärten gelassen. Nach der Aushärtung des Betons wird die Außenschalung 24 abgenommen, in jeden Anker 7 im oberen Bereich der Außenseite des fertiggestellten Betonierabschnitts 13' ein Einhängring 34 (vgl. Fig. 8) eingeschraubt und das Gerüst 6 mittels eines Krans angehoben und mit Schuhen in diesen Ankern eingehängt. Der ringförmige obere Teil 10 des vorhergehenden Schalungsabschnitts 14 wird von der Betonwand 4 abgeschraubt und kann nach Öffnung eines Ausbaukeilelementes in mehrere Ringsegmente zerlegt werden.

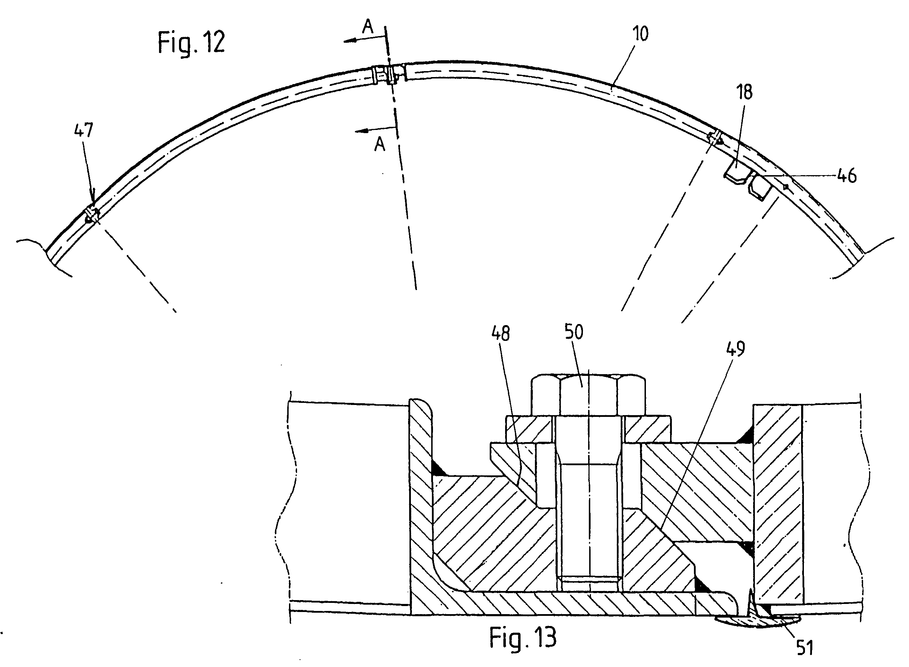

Ein solches Ausbaukeilelement 8 ist in den Figuren 12 und 13 dargestellt, die sich auf ein etwas modifiziertes Ausführungsbeispiel eines oberen Teils 10 eines Schalungsabschnitts 14 beziehen. Bei diesem modifizierten Ausführungsbeispiel sind die Führungslaschen 18 in Form von schräg nach oben abstehenden Blechen ausgebildet, die in der Mitte einen trichterförmigen Schlitz aufweisen. Dieser Schlitz wirkt mit an der Innenseite im untersten Bereich des Hauptteils 27' angebrachten Führungsblechen zusammen, welche beim Aufsetzen des nächsthöheren Schalungsabschnitts 14' in den Schlitz 46 eingefädelt werden. Dadurch wird die Justierung des nächsten Schalungsabschnitts 14' in dessen Umfangsrichtung relativ zum oberen Teil 10 erreicht. Weiters sind in Fig. 12 die Verschraubungen 47 dargestellt, über die die einzelnen Segmente des oberen Teils 10 aneinander befestigt werden (diese befinden sich an der Unterseite des oberen Steges des U-Profils des oberen Teils 10). Das Ausbaukeilelement 8 weist Keilflächen 48, 49 auf, an denen die beiden über eine Schraube 50 miteinander verschraubten Teile des Ausbaukeilelements aneinander angrenzen. Nach Öffnen der Schraube 50 kann das Ausbaukeilelement geöffnet werden, wobei die Keilflächen 48, 49 zur Verhinderung einer Verklemmung der beiden Teile des Ausbaukeilelementes dienen, wenn eine Druckkraft (aufgrund des eingebrachten Betons) auf die beiden Teile des Ausbaukeilelements wirkt. Der Spalt in der Schalhaut wird von einem PVC-Streifen 51 überdeckt.

Auch der Hauptteil 27' des Schalungsabschnitts 14' wird entlang seines Umfangs in mehrere Teile zerlegt, die Umfangsteile des oberen Teils 10 und des Hauptteils 27' des Schalungsabschnitts 14' entsprechen einander dabei. Die Schrauben 28 zwischen dem oberen Teil 10' und dem Hauptteil 27' (bzw. die diese Teile verbindenden Klemmteile) des Schalungsabschnitts 14' werden gelöst und die Teile 27', 10 werden mittels eines Krans aus dem Bauwerk herausgehoben. An den Innenseiten der Anker 7 im oberen Bereich des Betonierabschnitts 13' werden Einhängringe 34 eingeschraubt. Die sternförmigen Arme der Arbeitsplattform 9 werden entsprechend gekürzt bzw. eingeschoben, und die Arbeitsplattform 9 wird mittels eines Krans angehoben und in den Ankern 7 am oberen Ende des Betonierabschnitts 13' mittels entsprechender Schuhe eingehängt. Somit ist ein weiterer Betonierabschnitt abgeschlossen und der in Fig. 2 dargestellte Zustand wiederum erreicht. Der Schalungsabschnitt 14 der Innenschalung steht nunmehr für den entsprechenden Betonierschritt eines mit gleichzeitiger Bautätigkeit zu errichtenden gleichförmigen Bauwerks zur Verfügung. Der obere Teil 10' des Schalungsabschnitts 14' ist an der Innenseite der Betonwand 4 befestigt und dient als Auflager für den Schalungsabschnitt des nächstfolgenden Betonierschritts.

Im ersten Betonierabschnitt wird der unterste Schalungsabschnitt des Bauwerks auf die Bodenplatte des Bauwerks aufgesetzt und entsprechend ausgerichtet. Dazu können beispielsweise an der Unterkante des Schalungsabschnitts entlang von dessen Umfang mehrere Stellschrauben vorgesehen sein, über die der Schalungsabschnitt auf der Bodenplatte aufliegt. Nach deren Einstellung unter exakter Ausrichtung des Schalungsabschnitts wird ein die Schalhaut nach unten bis zur Bodenplatte verlängerndes, flächiges Element am Schalungsabschnitt angebracht.

Unterschiedliche Modifikationen des beschriebenen Ausführungsbeispiels der Erfindung sind denkbar und möglich. Obwohl die Ausbildung der Außenschalung als Kletterschalung einfach und vorteilhaft ist, wäre eine Ausbildung der Außenschalung auf eine andere Art und Weise möglich. Beispielsweise könnte eine Außenschalung vorgesehen sein, die in analoger Weise zur Innenschalung ausgebildet ist. Eine solche Außenschalung würde somit eine Mehrzahl von miteinander verbindbaren Schalungsabschnitten aufweisen, die in ihrem Durchmesser an den jeweiligen Betonierabschnitt angepaßt sind und insgesamt der Form der äußeren Oberfläche der kegelstumpfförmigen Betonwand entsprechen. Ein solcher Schalungsabschnitt einer Außenwandung könnte ebenfalls einen abnehmbaren oberen Teil aufweisen, der an der Betonwand befestigt wird und als Auflager für den zum nächsten Betonierschritt gehörenden Schalungsabschnitt dient. Auch könnte jeweils der gesamte Schalungsabschnitt der Außenschalung mit der Betonwand verbunden werden und als Auflager für den dem nächsten Betonschritt zugeordneten Schalungsabschnitt dienen und erst nach Fertigstellung dieses nächsten Betonierschritts abgenommen werden.

### Legende zu den Hinweisziffern:

- 1: Windrad
- 2: Bauwerk
- 3: Stahlkappe
- 4: Betonwand
- 5: Krone
- 6: Gerüst
- 7: Anker
- 8: Ausbaukeilelement
- 9: Arbeitsplattform
- 10, 10': oberer Teil
- 11: Schraubenloch
- 12: Schraube
- 13, 13': Betonierabschnitt
- 14, 14': Schalungsabschnitt
- 15: Schraube
- 16: Schalungshaut
- 17: Arbeitsplattform
- 18: Führungslasche
- 19: Durchtrittsöffnung
- 20: Armierung
- 21: Schalungselement
- 22: Schalungselement
- 23: Arbeitsplattform
- 24: Außenschalung
- 25: Dübel
- 26: Aussteifungsring
- 27, 27': Hauptteil
- 28: Schraube
- 29: Befestigungswinkel
- 30: Gewindeplatte
- 31: Gewindestange
- 32: Kletterkonus
- 33: Schraube
- 34: Einhängring
- 35: Hohlprofil
- 36: Arm
- 37: Ausbauprofilteile
- 38: Arm
- 39: Flansch
- 40: Vorsprung
- 41: Winkel
- 42: Platte
- 43: Lasche
- 44: Dorn
- 45: Stellmutter
- 46: Schlitz
- 47: Verschraubung
- 48: Keilfläche
- 49: Keilfläche
- 50: Schraube
- 51: PVC-Streifen

## Patentansprüche

1. Verfahren zur Errichtung mehrerer gleichartiger Bauwerke aus Stahlbeton mit einer kegelstumpfförmigen Form, insbesondere von Stahlbetontürmen einer Windkraftanlage, wobei jedes derartige Bauwerk in einzelnen Betonierschritten errichtet wird, in denen jeweils ein Betonierabschnitt betoniert wird, **dadurch gekennzeichnet, daß** zur Errichtung der mehreren gleichartigen Bauwerke mit zumindest teilweise gleichzeitiger Bautätigkeit eine einzelne Innenschalung verwendet wird, welche aus einer Mehrzahl von miteinander verbindbaren Schalungsabschnitten (14, 14') besteht, deren Höhe jeweils der Höhe eines Betonierabschnitts (13, 13') entspricht und deren äußere die Schalhaut bildenden Oberflächen in ihrer Gesamtheit der Form der inneren Oberflächen der kegelstumpfförmigen Betonwände (4) der Bauwerke (2) entsprechen und die einen oberen, vom Hauptteil (27, 27') des Schalungsabschnitts (14, 14') abnehmbaren Teil (10, 10') aufweisen, wobei bei einem Betonierschritt folgende Arbeitsschritte durchgeführt werden:
- der zu diesem Betonierschritt (13') gehörende, fertig montierte Schalungsabschnitt (14') der Innenschalung wird auf dem im vorherigen Betonierschritt (13) an der Betonwand (4) befestigten oberen Teil (10) des zum vorherigen Betonierschritt (13) gehörigen Schalungsabschnittes (14) der Innenschalung aufgesetzt, wobei an der Außenseite des Schalungsabschnitts (14') eine Armierung (20) bereits angebracht ist oder eine Armierung (20) in einem weiteren Arbeitsschritt auf der Mauerkrone (5) des vorherigen Betonierschritts (13) angeordnet wird,
- eine Außenschalung (24) wird angebracht,
- Beton wird eingefüllt und aushärten gelassen, wobei der obere Teil (10') des Schalungsabschnitts (14') der Innenschalung an der Betonwand (4) befestigt wird und
- die Befestigung des oberen Teils (10) des zum vorherigen Betonierschritt (13) gehörenden Schalungsabschnitts (14) der Innenschalung wird gelöst, und dieser obere Teil (10) wird zusammen mit dem Hauptteil (27') des zum darauffolgenden Betonierschritt (13') gehörenden Schalungsabschnitts (14') von der Betonwand (4) abgenommen.

2. Verfahren nach Anspruch 1, **dadurch gekennzeichnet, daß** der obere Teil (10, 10') eines Schalungsabschnitts (14, 14') aus einem lösbar am Hauptteil (27, 27') des Schalungsabschnitts (14, 14') befestigten, vorzugsweise von einem U-Profil gebildeten, Ring besteht, dessen äußere Oberfläche einen Teil der Schalhaut bildet.

3. Verfahren nach einem der Ansprüche 1 oder 2, **dadurch gekennzeichnet, daß** der obere Teil (10, 10') eines Schalungsabschnitts (14, 14') über bei der Herstellung eines Betonierabschnitts (13, 13') in die Betonwand (4) einbetonierte Dübel (25) befestigt wird, in die durch den oberen Teil (10, 10') tretende Schrauben (12) reichen.

4. Verfahren nach einem der Ansprüche 1 bis 3, **dadurch gekennzeichnet, daß** zum Abnehmen des oberen Teils (10) des zum vorherigen Betonierschritt (13) gehörigen Schalungsabschnitts (14) zusammen mit dem Hauptteil (27') des Schalungsabschnitts (14') dieses Betonierschrittes (13') der obere Teil (10) und der Hauptteil (27') des Schalungsabschnitts (14') entlang von ihrem Umfang in mehrere Teile aufteilbar sind, wobei die Unterteilungen einander entsprechen.

5. Verfahren nach Anspruch 4, **dadurch gekennzeichnet, daß** die Aufteilung des oberen Teils (10, 10') nach Lösen oder nach der Entfernung eines Ausbaukeilelementes (8) erfolgt.

6. Verfahren nach einem der Ansprüche 1 bis 5, **dadurch gekennzeichnet, daß** an der Innenseite des oberen Teils entlang des Umfangs des oberen Teils (10, 10') mehrere nach oben abstehende Führungslaschen (18) zur Unterstützung des Aufsetzens des nächst oberen Schalungsabschnitts (14, 14') angeordnet sind.

7. Verfahren nach einem der Ansprüche 1 bis 6, **dadurch gekennzeichnet, daß** als Außenschalung eine Kletterschalung verwendet wird, wobei für jedes der mit gleichzeitiger Bautätigkeit zu errichtenden Bauwerke (2) eine eigene als Kletterschalung ausgebildete Außenschalung (24) vorgesehen ist, deren Höhe der Höhe eines Betonierabschnitts (13, 13') entspricht und deren innerer Durchmesser veränderbar ist.

8. Schalungsabschnitt einer Innenschalung zur Errichtung mehrerer gleichartiger Bauwerke aus Stahlbeton mit einer kegelstumpfförmigen Form, insbesondere von Stahlbetontürmen einer Windkraftanlage, wobei jedes derartige Bauwerk in einzelnen Betonierschritten errichtet wird, in denen jeweils ein Betonierabschnitt betoniert wird, wobei die äußere die Schalhaut bildende Oberfläche des Schalungsabschnitts kegelstumpfförmig ist, **dadurch gekennzeichnet, daß** der Schalungsabschnitt (14, 14') einen Hauptteil (27, 27') und einen oberen, am Hauptteil des Schalungsabschnitts über Verschraubungen oder Klemmteile lösbar befestigten Teil (10, 10') aufweist, dessen Außenseite einen Teil der Schalhaut bildet, dass der obere Teil (10, 10') Schrauben (12) und Dübel (25) umfaßt, über die der obere Teil (10,10') an der Betonwand (4) befestigbar ist und die beim Betonieren des Betonierabschnitts (13, 13') mit einbetoniert wurden, dass auf den oberen Teil (10) eines Schalungsabschnittes (14) der Hauptteil (27') des zum nächsten Betonierschritt gehörenden Schalungsabschnittes (14') aufsetzbar und am oberen Teil (10) befestigbar ist dass der Hauptteil (27, 27') und der obere Teil (10, 10') jeweils entlang ihres Umfangs in mehrere Umfangsteile zerlegbar sind, wobei die Umfangsteile des oberen Teils und des Hauptteils einander entsprechen.

9. Schalungsabschnitt nach Anspruch 8, **dadurch gekennzeichnet, daß** der obere Teil (10, 10') insgesamt umfanggeschlossen ausgebildet ist.

10. Schalungsabschnitt nach Anspruch 8 oder Anspruch 9, **dadurch gekennzeichnet, daß** der obere Teil (10, 10') im Querschnitt U-profilförmig ausgebildet ist, wobei der die beiden Seitenschenkel verbindende Basissteg, einen Teil der Schalhaut bildet.

11. Schalungsabschnitt nach einem der Ansprüche 8 bis 10, **dadurch gekennzeichnet, daß** am oberen Teil (10, 10') des Schalungsabschnitts (14, 14') nach innen und nach oben abstehende Führungslaschen (18) zur Erleichterung der Positionierung des Hauptteils (27') des zum nächsten Betonierschritt gehörenden Schalungsabschnitts (14') auf dem oberen Teil (10) angeordnet sind.

## Claims

1. Method for erecting a plurality of reinforced-concrete constructions of the same kind having a frustoconical shape, in particular reinforced-concrete towers of a wind power station, each construction of this kind being erected in individual concreting steps, in each of which a concreting section is concreted, **characterised in that**, to erect the plurality of constructions of the same kind with at least partially simultaneous building activity, use is made of a single inner formwork comprising a plurality of interconnectable formwork sections (14, 14'), the height of which corresponds in each case to the height of a concreting section (13, 13') and the outer surfaces of which, forming the formwork shell, correspond as a whole to the shape of the inner surfaces of the frustoconical concrete walls (4) of the constructions (2), and which have an upper part (10, 10') removable from the main part (27, 27') of the formwork section (14, 14'), the following working steps being carried out in a concreting step:
- the ready-assembled formwork section (14') of the inner formwork belonging to this concreting step (13') is placed on top of the upper part (10), fastened to the concrete wall (4) in the previous concreting step (13), of the formwork section (14) of the inner formwork belonging to the previous concreting step (13), a reinforcement (20) having already been attached to the outside of the formwork section (14') or a reinforcement (20) being arranged, in a further working step, on the crest (5) of the wall of the previous concreting step (13),
- an outer formwork (24) is attached,
- concrete is poured in and allowed to set, the upper part (10') of the formwork section (14') of the inner formwork being fastened to the concrete wall (4), and
- the fastening of the upper part (10) of the formwork section (14) of the inner formwork belonging to the previous concreting step (13) is detached, and this upper part (10) is removed from the concrete wall (4) together with the main part (27') of the formwork section (14') belonging to the following concreting step (13').

2. Method according to Claim 1, **characterised in that** the upper part (10, 10') of a formwork section (14, 14') comprises a ring which is detachably fastened to the main part (27, 27') of the formwork section (14, 14') and is preferably formed from a U-section, and the outer surface of which forms part of the formwork shell.

3. Method according to one of Claims 1 and 2, **characterised in that** the upper part (10, 10') of a formwork section (14, 14') is fastened by means of dowels (25) which are encased in the concrete wall (4) during the production of a concreting section (13, 13') and into which extend screws (12) passing through the upper part (10, 10').

4. Method according to one of Claims 1 to 3, **characterised in that**, to remove the upper part (10) of the formwork section (14) belonging to the previous concreting step (13) together with the main part (27') of the formwork section (14') of this concreting step (13'), the upper part (10) and the main part (27') of the formwork section (14') can be divided up into a plurality of parts along their circumference, the subdivisions corresponding to one another.

5. Method according to Claim 4, **characterised in that** the dividing-up of the upper part (10, 10') takes place after a demountable wedge element (8) has been released or removed.

6. Method according to one of Claims 1 to 5, **characterised in that** a plurality of upwardly projecting guide lugs (18) for supporting the mounting of the next-upper formwork section (14, 14') are arranged on the inside of the upper part along the circumference of the upper part (10, 10').

7. Method according to one of Claims 1 to 6, **characterised in that** a climbing formwork is used as the outer formwork, in which, for each of the constructions (2) to be erected with simultaneous building activity, there is provided a separate outer formwork (24) designed as a climbing formwork, the height of which corresponds to the height of a concreting section (13, 13') and the inner diameter of which is variable.

8. Formwork section of an inner formwork for erecting a plurality of reinforced-concrete constructions of the same kind having a frustoconical shape, in particular reinforced-concrete towers of a wind power station, each construction of this kind being erected in individual concreting steps, in each of which a concreting section is concreted, the outer surface of the formwork section which forms the formwork shell being frustoconical, **characterised in that** the formwork section (14, 14') has a main part (27, 27') and an upper part (10, 10'), which is detachably fastened to the main part of the formwork section by means of screwed connections or clamping parts and the outside of which forms part of the formwork shell, **in that** the upper part (10, 10') comprises screws (12) and dowels (25), by means of which the upper part (10, 10') can be fastened to the concrete wall (4) and which have been encased during the concreting of the concreting section (13, 13'), **in that** the main part (27') of the formwork section (14') belonging to the next concreting step can be placed on top of the upper part (10) of a formwork section (14) and fastened to the upper part (10), **in that** the main part (27, 27') and the upper part (10, 10') can each be separated along their circumference into a plurality of circumferential parts, the circumferential parts of the upper part and of the main part corresponding to one another.

9. Formwork section according to Claim 8, **characterised in that** the upper part (10, 10') as a whole is designed to be circumferentially closed.

10. Formwork section according to Claim 8 or Claim 9, **characterised in that** the upper part (10, 10') is designed in the shape of a U-section in cross-section, the base web which connects the two side legs forming part of the formwork shell.

11. Formwork section according to one of Claims 8 to 10, **characterised in that** inwardly and upwardly projecting guide lugs (18) are arranged on the upper part (10, 10') of the formwork section (14, 14') for the purpose of facilitating the positioning of the main part (27') of the formwork section (14') belonging to the next concreting step on the upper part (10).

## Revendications

1. Procédé de construction de plusieurs éléments de construction identiques en béton armé ayant une forme de cône tronqué, notamment des pylônes supports en béton armé d'une installation d'éoliennes, chacun de ces éléments de construction étant construit au cours d'étapes de bétonnage individuelles, dans lesquelles à chaque fois on bétonne une partie de bétonnage,
**caractérisé en ce que**
pour construire plusieurs éléments de construction identiques en réalisant, au moins partiellement, une construction concomitante, on utilise un seul coffrage interne, composé d'une quantité de parties de coffrage reliables entre elles (14, 14'), dont la hauteur correspond à chaque fois à la hauteur d'une partie de bétonnage (13, 13') et dont les surfaces extérieures formant la peau du coffrage correspondent dans leur ensemble à la forme des surfaces intérieures des parois en béton (4) en forme de cône tronqué des éléments de construction (2) et qui présentent un élément supérieur (10, 10') pouvant être enlevé de l'élément principal (27, 27') de la partie de coffrage (14, 14'), en effectuant pour une étape de bétonnage les étapes de travail suivantes :
- on place la partie de coffrage pré-montée (14') du coffrage interne et appartenant à cette étape de bétonnage (13') sur l'élément supérieur (10) de la partie de coffrage (14) du coffrage interne appartenant à l'étape de bétonnage précédente (13), élément qui est fixé dans l'étape de bétonnage précédente (13) sur la paroi de béton (4), une armature (20) étant déjà disposée sur la face extérieure de la partie de coffrage (14') ou une armature (20) étant disposée au cours d'une autre étape de travail sur le couronnement (5) de l'étape de bétonnage précédente (13),
- on dépose un coffrage externe (24),
- on introduit du béton que l'on laisse durcir, l'élément supérieur (10') de la partie de coffrage (14') du coffrage interne étant fixé sur la paroi en béton (4), et
- on désengage la fixation de l'élément supérieur (10) de la partie de coffrage (14) du coffrage interne appartenant à l'étape de bétonnage précédente (13), et on enlève cet élément supérieur (10) de la paroi en béton (4), conjointement avec l'élément principal (27') de la partie de coffrage (14') appartenant à l'étape de bétonnage suivante (13').

2. Procédé selon la revendication 1,
**caractérisé en ce que**
l'élément supérieur (10, 10') d'une partie de coffrage (14, 14') est composé d'un anneau, formé de préférence selon un profil en U et fixé de manière amovible à l'élément principal (27, 27') de la partie de coffrage (14, 14'), la surface extérieure de cet anneau formant une partie de la peau de coffrage.

3. Procédé selon l'une des revendications 1 ou 2,
**caractérisé en ce que**
l'élément supérieur (10, 10') d'une partie de coffrage (14, 14') est fixé sur des chevilles (25) bétonnées dans la paroi en béton (4) lors de la construction d'une partie de bétonnage (13, 13') et des vis (12) traversant l'élément supérieur (10, 10') sont dirigées jusqu'à ces chevilles.

4. Procédé selon l'une des revendications 1 à 3,
**caractérisé en ce que**
pour desceller l'élément supérieur (10) de la partie de coffrage (14) appartenant à l'étape de bétonnage précédente (13), conjointement avec l'élément principal (27') de la partie de coffrage (14') de cette étape de bétonnage (13'), l'élément supérieur (10) et l'élément principal (27') de la partie de coffrage (14') peuvent être divisés en plusieurs éléments le long de leur pourtour, ces divisions correspondant entre elles.

5. Procédé selon la revendication 4,
**caractérisé en ce que**
la répartition de l'élément supérieur (10, 10') est effectuée en désengageant ou en enlevant un élément de cale d'assemblage (8).

6. Procédé selon l'une des revendications 1 à 5,
**caractérisé en ce que**
dans la face intérieure de l'élément supérieur, le long du pourtour de l'élément supérieur (10, 10'), plusieurs pattes de guidage (18) s'élevant vers le haut sont disposées pour supporter la mise en place de la partie de coffrage supérieure suivante (14, 14').

7. Procédé selon l'une des revendications 1 à 6,
**caractérisé en ce que**
un coffrage grimpant est utilisé pour servir de coffrage externe, un coffrage externe particulier (24) étant prévu sous la forme d'un coffrage grimpant pour chacun des éléments de construction (2) à construire en construction concomitante, la hauteur du coffrage correspondant à la hauteur d'une partie de bétonnage (13, 13') et son diamètre interne étant variable.

8. Partie de coffrage d'un coffrage interne pour construire plusieurs éléments de construction identiques en béton armé ayant une forme de cône tronqué, notamment des pylônes supports en béton armé d'une installation d'éoliennes, chacun de ces éléments de construction étant construit au cours d'étapes de bétonnage individuelles, dans lesquelles à chaque fois une partie de bétonnage est bétonnée, la surface extérieure formant la peau de coffrage de la partie de coffrage étant en forme de cône tronqué,
**caractérisée en ce que**
la partie de coffrage (14, 14') présente un élément principal (27, 27') et un élément supérieur (10, 10') fixé de manière amovible à l'élément principal de la partie de coffrage par vissage ou par adhérence, la face extérieure de cet élément formant une partie de la peau de coffrage, l'élément supérieur (10, 10') comprenant des vis (12) et des chevilles (25), qui ont été bétonnées lors du bétonnage de la partie de bétonnage (13, 13') et par lesquelles l'élément supérieur (10, 10') peut être fixé sur la paroi en béton (4),
l'élément principal (27') de la partie de coffrage (14') appartenant à l'étape de bétonnage suivante pouvant être déposé sur l'élément supérieur (10) d'une partie de coffrage (14) et fixé sur l'élément supérieur (10),
l'élément principal (27, 27') et l'élément supérieur (10, 10') pouvant être décomposés à chaque fois le long de leur pourtour en plusieurs éléments de pourtour, les éléments de pourtour de l'élément supérieur et de l'élément principal correspondant entre eux.

9. Partie de coffrage selon la revendication 8,
**caractérisée en ce que**
l'élément supérieur (10, 10') est configuré généralement avec un pourtour fermé.

10. Partie de coffrage selon la revendication 8 ou 9,
**caractérisée en ce que**
l'élément supérieur (10, 10') est en coupe transversale en forme d'un profilé en U, le support de base reliant les deux branches latérales formant une partie de la peau de coffrage.

11. Partie de coffrage selon l'une des revendications 8 à 10,
**caractérisé en ce que**
sur l'élément supérieur (10, 10') de la partie de coffrage (14, 14'), des pattes de guidage (18) dépassant vers l'intérieur et vers le haut sont disposées pour faciliter le positionnement de l'élément principal (27') de la partie de coffrage (14') appartenant à l'étape de bétonnage suivante sur l'élément supérieur (10).
